# EUROPEAN PATENT APPLICATION

(11) **EP 1 720 120 A1**
(43) Date of publication of application: **08.11.2006**
(21) Application number: 05290981.9
(22) Date of filing: 04.05.2005
(51) Int. Cl.: G06K 19/077

(54) **A method for manufacturing a smart card, a thus manufactured smart card, and a method for manufacturing a wired antenna**

(71) Applicant: Axalto S.A., 92120 Montrouge (FR)
(72) Inventor: Deloche, Manuel c/o Axalto SA, 92120 Montrouge (FR)
(74) Representative: Cassagne, Philippe M.J.

(57) **Abstract**

The invention relates to a method for manufacturing a smart card and a thus manufactured smart card. The invention applies more particularly to smart cards comprising an antenna. The problem to be solved by the invention is to provide a method for manufacturing a smart card comprising an inlet (30) which hosts an antenna (31) and an electronic module (40) electrically connected to said antenna, said inlet (30) being covered by at least one layer (39), said method being cheaper than existing methods, easier and shorter to execute, and well adapted to both groups of contactless smart cards, namely dual-interface cards and contactless or hybrid cards. The solution to this problem is achieved by the following steps :
- affixing a wired antenna (31) onto the inlet,
- affixing at least one metallic plate (33) onto both ends (32) of the wired antenna (31),
- creating connection areas (35) in the metallic plate(s) (33), at each end (32) of the wired antenna, and
- connecting the electronic module (40) to the thus obtained connection areas.

## Description

The invention relates to an improved method for manufacturing a wired antenna on an inlet for smart cards, a smart card containing a thus manufactured wired antenna, a method for manufacturing a smart card and a thus manufactured smart card.

More particularly, the invention relates to dual-interface smart cards and also contactless smart cards comprising an antenna.

Practically, smart cards are divided into two categories.

Smart cards of a first category use contact pads to connect electrically the microcontroller to the outside world.

Smart cards of a second category use radio frequency waves to communicate. They comprise a radio frequency microcontroller electrically connected to an antenna.

In fact, this second category is itself divided into two groups. A first group comprises dual-interface cards, also called combi-cards, which comprise a radio frequency microcontroller electrically connected to both an antenna and a contact plate in order to transfer data to and from the card either by means of contact pads or by means of radio frequency waves, depending on the technology of the reader.

The second group comprises either contacless smart cards, which communicate only by means of radio frequency waves, or hybrid cards, which include two technologies to transfer different data. Hybrid cards may comprise for example a first electronic module connected to an antenna for radio frequency waves communication and another electronic module connected to a contact plate for transferring other data to or from this second module by means of contact pads.

The characteristics of the radio frequency interface used for contactless communication was defined by the International Standard Organisation (ISO) in the standard referenced ISO-14443A and ISO-14443B.

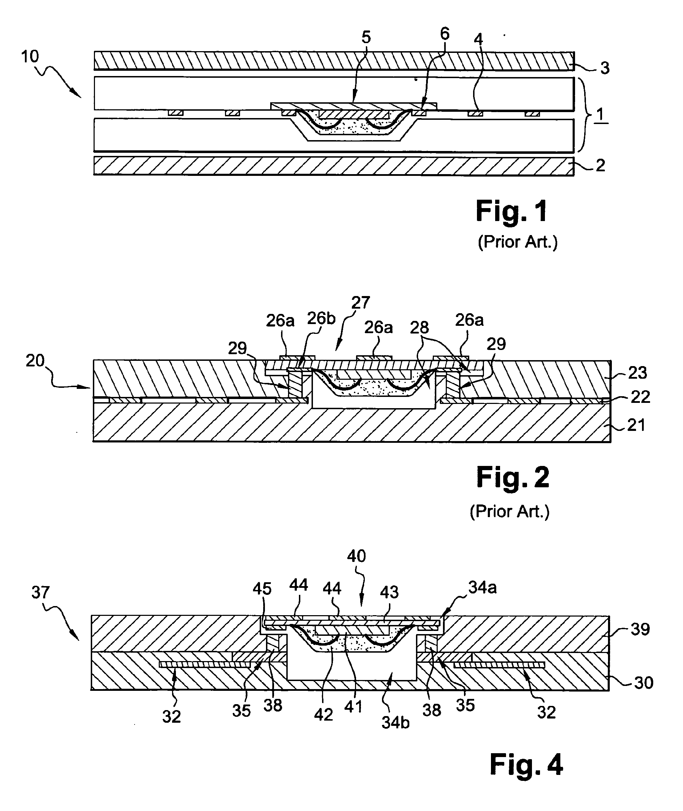

In figure 1, a schematic conventional contactless smart card 10 is illustrated. The manufacture of contactless smart cards is usually based on a semifinished product often called "pre-laminated inlet" 1. The inlet is a laminated plastic sheet, made of poly-vinyl-chloride for example, which hosts a copper wired antenna 4 connected to the contact pads 6 of an electronic module 5, by thermo-compression welding, or other mean such as a conductive glue, for example a silver glue, or an anisotropic glue. The inlet is then laminated between two or more plastic sheets 2,3.

In figure 2, a schematic conventional dual-interface card 20 is illustrated. The manufacture of a such dual-interface card consists usually in etching an antenna 22 on a plastic sheet 21, covering this plastic sheet 21 by at least one layer 23 and laminating the thus obtained stack of layers. Then a double cavity 28 is provided in the stack of layers in order to putt an electronic module 27 which comprises connection pads 26a, 26b on its both sides. The module is positioned in the cavity 28 such that the connection pads 26a of the upper side rise to the surface of the external layer 23. Before positioning the module, drill holes 29 are provided between the depth of the largest part of the double cavity 28 and the antenna 22. These holes 29 are then filled with a conductive material in order to electrically connect the connection pads 26b of the lower side of the module 27 with the antenna 22.

Nowadays wired antennas, affixed onto a substrate, are preferred rather than etched antennas because they are cheaper than etched antennas. Namely, the etching technology involves to use photo-masks for exposing a resin on a copper plate and then, to etch the copper plate. With this technology, 90% of the expensive copper is removed during etching, so that etching of an antenna requires more copper than a copper wire which is affixed on a substrate. In fact, the cost of an etched copper antenna compared to a wired copper antenna is about 50% more in volumes.

Moreover, manufacturing a re-designed etched antenna implies to manufacture new photo-masks for exposing a resin and etch the copper. These operations are very expensive and take a very long time. Compared to this technology, manufacturing a re-designed wired antenna requires only few changes in the programming of a numerically controlled machine. This operation is therefore much cheaper than operation of redesigning an etched antenna.

Wired antenna cross-overs, also called bridges, are most reliable than etched antenna cross-overs since no additional part is needed. Namely, the wire being itself electrically insulated by a sheath, it can be positioned above or below the turn formed by the antenna on the substrate without any problem. Comparatively, etched antenna cross-overs need an additional part, for example they need other connection pads electrically connected to each other by means of junction etched on a face of the plastic sheet opposite to the etched antenna. Such a cross-over is about 35% more expensive than the cross-over of a wired antenna and it prevents to make a further graphical personalization in its area, because the step of lamination introduces locally unacceptable surface defects around this cross-over.

Dual-interface electronic module connection with regular wired antenna, as in the contactless smart cards is very difficult to manufacture since thermo-compression welding is impossible. Namely, the connection areas of the antenna 22 are not directly in physical contact with the contact pads 26b of the module 27 so that the thermo-compression welding is not possible.

Moreover, the other various existing connection technologies need a minimum surface of the connection areas to have an efficient electrical contact. Namely, an anisotropic glue for example contains small conductive balls in contact to each other and also to the contact pads of the electronic module. Nevertheless, during the life of a card, a relaxation phenomenon appears in the anisotropic glue so that balls aren't anymore in contact and the resistance of the electrical connection increases until card isn't functional anymore. Finally, when a conductive glue is used, it can involved a short-circuit between the connection areas of the antenna and the turns of the antenna which are closed to the connection areas and revealed by holes 29. Therefore, in order to have an efficient electrical contact between the module and the antenna, the minimum surface of copper connection areas of the antenna, for a "silver-glue-like" based dual-interface module connection, must be for example about 1 to 1,5 mm², and the minimum surface of copper connection areas of the antenna for an anisotropic conductive film based dual-interface module connection, must be for example about 2 to 2,5 mm².

Finally, we know that in case of the manufacture of smart cards, the cost of the card, including the cost of the antenna and the cost of the connection of the dual-interface module, must be as lower as possible. Moreover, in order to lower the cost, we look for using the same conventional machine for manufacturing all types of cards, namely dual-interface smart cards, contacless smart cards, hybrid smart cards etc...

Considering the above, a problem intended to be solved by the invention is to provide a method for manufacturing a smart card comprising an inlet which hosts an antenna and an electronic module, including a radio-frequency microcontroller, said electronic module being electrically connected to said antenna, said inlet being covered by at least one layer, said method being cheaper than existing methods, easier and shorter to execute, and well adapted to both groups of contactless smart cards, namely dual-interface cards and contactless or hybrid cards.

In a first aspect, the solution of the invention consists in :
- affixing a wired antenna onto the inlet,
- affixing at least one metallic plate onto both ends of the wired antenna,
- creating connection areas in the metallic plate(s), at each end of the wired antenna,
- connecting the electronic module to the thus obtained connection areas.

Thus, the use of a wired antenna for manufacturing all types of contactless smart cards decreases the cost of smart cards and presents all the advantages of a wired antenna. Moreover, thanks to the use of a metallic plate to create the connection areas at each end of the antenna, a sufficient surface is available for an efficient electrical connection of an electronic module, more particularly for an efficient electrical contact of a dual-interface electronic module.

Another problem intended to be solved by the invention is to provide a method for manufacturing a wired antenna on a plastic sheet forming an inlet for smart card, said method enabling a further efficient electrical connection of an electronic module in a smart card, said electronic module being a dual-interface module or other, and also a further conventional graphical personalization of a smart card.

The solution of this second problem consists in :
- affixing a wired antenna onto the said plastic sheet, and
- affixing at least one metallic plate onto both ends of the wired antenna.

Then, a further step consists in creating connection areas in the metallic plate, at each end of the wired antenna.

An advantage of this solution is that the two wire ends of the antenna receive proper extensions that give a sufficient surface available for an efficient electrical connection of an electronic module.

For a better understanding of the present invention, reference will now be made, by way of example, to the following description of the invention and to the accompanying drawings, in which:
- figure 1, already described, is a schematic cross-section illustrating a contactless smart card according to the prior art;
- figure 2, already described, is a schematic cross-section illustrating a dual-interface smart card according to the prior art;
- figures 3A to 3C are respectively front views and a cross-sectional view of a dual-interface smart card at different steps of a manufacturing process according to a first embodiment of the invention,
- figure 4 is a cross-sectional view of a dual-interface smart card made according to another embodiment of the invention.

Corresponding numerals and symbols in the figures refer to corresponding parts, unless otherwise indicated.

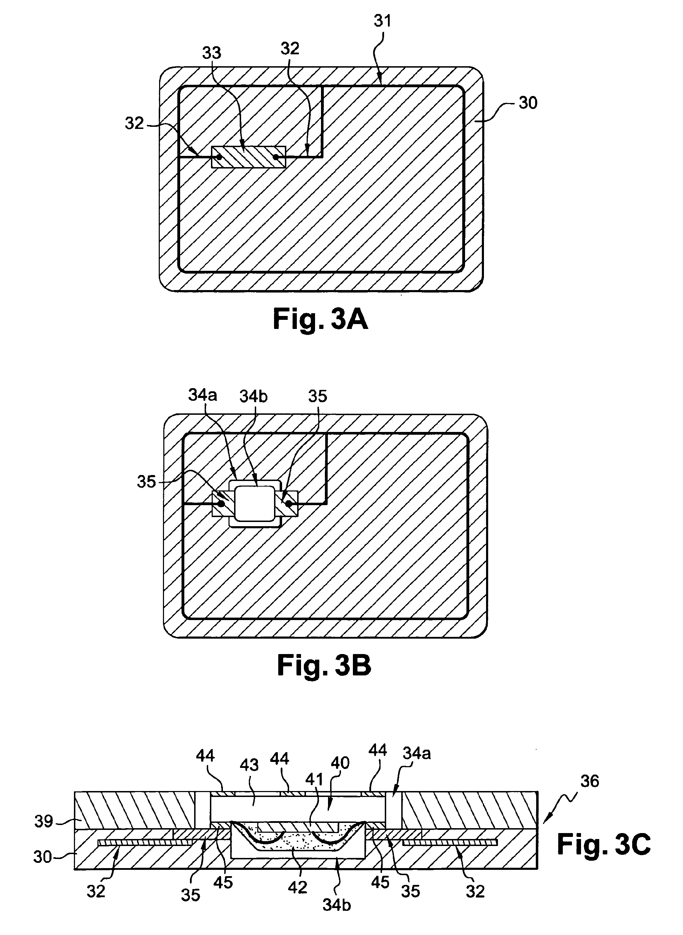

In figures 3A to 3C, are illustrated different steps of a method for manufacturing a smart card according to the invention.

In a first step, a wired antenna 31 is affixed onto a plastic sheet 30, such as a poly-vinyl-chloride sheet. The wired antenna is affixed by using conventional process, for example by heating locally the surface of the plastic sheet 30 in order to create a groove and by positioning the wire in the thus formed groove. In a second step, at least one metallic plate 33 is affixed onto both ends 32 of the wire antenna 31. In the embodiment illustrated on figure 3A, only one metallic plate 33 is affixed onto both ends of the wired antenna so that the affixed wired antenna is in electrical short circuit. Metallic plate 33 is affixed by any conventional mean to each antenna's end. Metallic plate 33 can be made of any metal, such as for example copper, or bronze or silvery copper etc. Then, the plastic sheet 30 is covered by at least another layer 39 to protect the wired antenna 31.

In a further step, connection areas 35 are created at each end of the wired antenna. For that, a double cavity 34a, 34b is milled as illustrated in figures 3B and 3C. In fact, during the milling of the double cavity 34, the metallic plate 33, and also the antenna short-circuit, is naturally cut so that the wired antenna is made functional. Thus, connection areas 35 are formed at each end 32 of the wired antenna.

The double cavity 34a, 34b has a largest part 34a and a narrower part 34b. This double cavity 34 is provided for embedding an electronic module 40 comprising the radio-frequency microcontroller, in such a manner that the narrower part 34b comprises the radio-frequency microcontroller 41 and its connections protected by a resin 42, and the largest part 34b comprises a support 43 having electrical pads 44, 45 on its both sides and connected to the radio-frequency microcontroller 41.

As illustrated in figure 3C, the connection areas 35 may be positioned in the depth of the card body 36 in such a manner that they appear in the depth of the largest part 34a of the double cavity 34. In this case, contact pads 45 on the lower part of the electronic module 40 are directly in contact with connection areas 35 of the antenna so that a connection by thermo-compression welding is possible. Of course, other connection means can be used, such as conductive glues or anisotropic glues for example.

In figure 4 is illustrated a cross-sectional view of dual-interface card 37 according to a variant. In this variant, the connection areas 35 don't appear in the depth of the largest part of the cavity 34a, but they are positioned below. Connections areas 35 are therefore invisible from the double cavity 34 so that an additional manufacturing step is required to drill holes 38 from the largest part 34a of the cavity 34 to the connection areas 35. Then, the holes 38 are filled with a conductive material such as conductive glue or anisotropic glue. In this variant, connection areas 35 have a sufficient surface available so that holes 38 may be larger than in conventional dual-interface cards, and they can be filed with a conductive material to ensure an efficient electrical contact of the electronic module 40.

In another embodiment, instead of using only one metallic plate 33, two metallic plates are respectively affixed onto each end of the wired antenna, thus constituting connection areas of the wired antenna. This embodiment has the advantage to be clean. Namely the operations of milling the double cavity 34, by milling successively one metallic plate 33 and plastic sheets 30, 39 as in the first embodiment can generate problems of pollution if the milling operations are made too fast. Therefore, in the first embodiment the operation of milling the cavity 34 must be made as slow enough to avoid problems of pollution by the metal.

Thanks to the described embodiments, with the same antenna design as for a dual-interface application, a contactless module can be connected to the wired antenna ends, as usually present in so-called "pre-laminated inlet" by any mean. Such an inlet is integrated into a card body to obtain a pure contactless card body. Another electronic module can also be embedded after regular cavity milling operations to obtain an hybrid card.

Consequently, the same antenna design, according to radio-frequency requirements, can be used for dual-interface cards and contactless cards. That also contributes to lower the final price since all contactless/dual-interface volumes can be purchased over a single product.

The previous embodiments were essentially described for dual-interface smart cards. However, it will be obvious for the person skilled in the art to accommodate the technology described hereby to other contactless devices comprising at least one antenna, one or several modules or other electric or electronic components.

## Claims

1. A method for manufacturing a wired antenna on a plastic sheet (30) forming an inlet for smart card, wherein said method comprises following steps :
- affixing a wired antenna (31) onto the said plastic sheet, and
- affixing at least one metallic plate (33) onto both ends (32) of the wired antenna (31).

2. The method of claim 1, wherein a further step consists in creating connection areas (35) in the metallic plate(s), at each end (32) of the wired antenna.

3. A smart card containing an antenna manufactured according to the method of claim 1 or 2.

4. A method for manufacturing a smart card (36, 37) comprising an inlet (30) which hosts an antenna (31) and an electronic module (40) including a radio-frequency microcontroller, said electronic module (40) being electrically connected to said antenna (31), said inlet (30) being covered by at least one layer (39), wherein said method comprises following steps :
- affixing a wired antenna (31) onto the inlet,
- affixing at least one metallic plate (33) onto both ends (32) of the wired antenna (31),
- creating connection areas (35) in the metallic plate(s) (33), at each end (32) of the wired antenna, and
- connecting the electronic module (40) to the thus obtained connection areas.

5. The method of claim 4, wherein the step of creation of the connection areas (35) is made by milling a double cavity (34), involving a cutting of the metallic plate (33) so as to form two connection areas (35) at each end (32) of the wired antenna.

6. The method of claim 4, wherein two metallic plates are respectively affixed onto each end of the wired antenna.

7. The method of anyone of previous claims 4 to 6, wherein connection areas (35) are positioned in the depth of the card body in such a manner that they appear in the depth of a largest part (34a) of the double cavity (34).

8. The method of claim 7, wherein an electronic module (40) is connected to the connection areas (35) by thermo-compression welding, or by means of a conductive glue or an anisotropic glue.

9. The method of anyone of previous claims 4 to 6, wherein a further step consists in drilling holes (38) from the largest part (34a) of the double cavity (34) to the connection areas (35).

10. A dual-interface smart card (36, 37) containing a wired antenna and manufactured according to the method as claimed in anyone of previous claims 4 to 9.

11. A contactless smart card containing a wired antenna and manufactured according to the method as claimed in previous claims 4 or 6.
